# FASCICULE DE BREVET EUROPEEN

(11) **EP 3 198 568 B1**
(45) Date de publication et mention de la délivrance du brevet: **10.03.2021**
(21) Numéro de dépôt: 15771883.4
(22) Date de dépôt: 21.09.2015
(51) Int. Cl.: G07C 9/00, B60R 25/24, G01S 13/87

(54) **DISPOSITIF DE CONTRÔLE DE VERROUILLAGE/DÉVERROUILLAGE ET/OU DE DÉMARRAGE D'UN VÉHICULE**
VORRICHTUNG ZUR STEUERUNG DER VERRIEGELUNG/ENTRIEGELUNG UND/ODER DES STARTS EINES FAHRZEUGS
DEVICE FOR CONTROLLING LOCKING/UNLOCKING AND/OR STARTING OF A VEHICLE

(30) Priorité: 24.09.2014 FR 1402144
(43) Date de publication de la demande: 02.08.2017
(73) Titulaire: Valeo Comfort and Driving Assistance, 94046 Créteil Cedex (FR)
(72) Inventeur: MENARD, Eric, 94046 Créteil Cedex (FR); MASSON, Fabienne, 94046 Créteil Cedex (FR); LECONTE, Eric, 94046 Créteil Cedex (FR)
(74) Mandataire: Delplanque, Arnaud
(86) Numéro de dépôt international: PCT/EP2015/071542
(87) Numéro de publication internationale: WO 2016/046105

(56) Documents cités:
- DE-A1-102005 062 455
- GB-A- 2 496 755
- GB-A- 2 511 377
- US-A1- 2013 143 594
- US-A1- 2014 210 592
- YILDIRIM B S ET AL: "Integrated Bluetooth and UWB Antenna", IEEE ANTENNAS AND WIRELESS PROPAGATION LETTERS, IEEE, PISCATAWAY, NJ, US, vol. 8, 1 janvier 2009 (2009-01-01), pages 149-152, XP011330922, ISSN: 1536-1225, DOI: 10.1109/LAWP.2009.2013371

## Description

### DOMAINE TECHNIQUE DE l'INVENTION

Le domaine technique de l'invention est celui des véhicules automobiles et plus particulièrement celui des véhicules dont l'accès est réalisé au moyen d'un appareil mobile. L'invention se rapporte ainsi à un dispositif de contrôle de verrouillage/déverrouillage et/ou de démarrage d'un véhicule tel que défini aux revendications 1 à 11.

On entend par appareil mobile tout dispositif permettant à une personne d'accéder à des données et informations peu importe l'endroit où cette personne se trouve. Sont regroupés dans cette catégorie notamment les téléphones mobiles, et plus particulièrement les smartphones, les ordinateurs portables, les tablettes numériques, les assistants numériques personnels (ou « PDAs »).

### ARRIERE-PLAN TECHNOLOGIQUE DE L'INVENTION

Un utilisateur peut aujourd'hui contrôler l'exécution d'une fonction d'un véhicule au moyen d'un appareil mobile, comme par exemple un smartphone. La fonction concernée est par exemple une fonction parmi les suivantes : verrouillage/déverrouillage du véhicule, démarrage du véhicule, parking automatique... Dans certaines applications, afin de pouvoir mettre en œuvre une de ces fonctions, l'appareil mobile doit avoir préalablement mémorisé une clé d'identification autorisant l'exécution d'au moins une fonction du véhicule. La mémorisation de la clé d'identification s'effectue dans un élément sécurisé de l'appareil mobile, par exemple sa carte SIM. L'utilisateur, en conservant l'appareil mobile sur lui, peut ainsi par exemple déverrouiller la serrure d'un ouvrant du véhicule. Pour ce faire, des données, notamment des données d'authentification contenues dans la clé d'identification, sont échangées entre l'appareil mobile et un module électronique du véhicule qui détermine si la clé d'identification du véhicule est valide. Dans des modes de mise en œuvre avantageux, ces échanges de données sont réalisés en respectant le protocole BLE (Bluetooth Low Energy).

Pour des raisons de sécurité, l'exécution d'une fonction du véhicule est conditionnée par la position à laquelle se trouve l'appareil mobile par rapport au véhicule. Le déverrouillage du véhicule peut s'effectuer lorsque l'utilisateur, et à fortiori l'appareil mobile, se trouve proche du véhicule, à une distance de l'ordre de 50cm. L'utilisateur doit tout de même montrer son intention de déverrouiller le véhicule en actionnant une poignée du véhicule pour la fonction déverrouillage du véhicule s'exécute. De même le verrouillage du véhicule s'effectue, les ouvrants du véhicule étant bien entendu clos, lorsque l'utilisateur s'éloigne du véhicule, par exemple d'une distance supérieure à un ou deux mètres. On peut donc considérer que le véhicule se verrouille alors qu'il est toujours présent dans le champ de vision de l'utilisateur, évitant ainsi toute intrusion mal intentionnée lorsque l'utilisateur ne voit plus son véhicule. Enfin, dans le cas du démarrage du véhicule, l'appareil mobile doit se trouver à l'intérieur de l'habitacle.

Plusieurs solutions sont aujourd'hui utilisées pour mesurer la distance entre l'appareil mobile et le véhicule comme par exemple la mesure de la puissance d'un signal reçu dont la puissance initiale est connue, ce qui permet de déduire la distance entre l'émetteur et le récepteur. On appelle cette méthode mesure par « RSSI » pour Received Signal Strength Indication en anglais. Une autre solution consiste en une mesure par GPS ou, dans le cas par exemple d'endroits où le GPS n'est pas accessible, une mesure faisant appel aux données fournies par les capteurs gyroscopiques et accélérométriques de l'appareil mobile. En effet, l'appareil mobile utilise ces données pour calculer et enregistrer les déplacements de l'utilisateur. On appelle cette méthode le « true positionning » (positionnement réel) en langue anglaise.

Les mesures par RSSI et GPS ne sont pas précises, de l'ordre de plusieurs mètres, elles ne garantissent donc pas que le cahier des charges défini pour conditionner l'activation des fonctions du véhicule en fonction de la position de l'appareil mobile par rapport au véhicule soit respecté. De plus on souhaite s'affranchir de l'utilisation des capteurs gyroscopiques et des capteurs d'accélération de l'appareil mobile et donc ne pas utiliser le true positioning

Le document DE 10 2005 062 455 A1 divulgue un dispositif de contrôle de verrouillage/déverrouillage et/ou de démarrage d'un véhicule, ce dispositif utilisant deux modes de communication, un premier mode du type 433 MHz pour échanger un code cryptographique et un deuxième mode du type Ultra Wide Band pour déterminer la position du dispositif par rapport au véhicule.

### RESUME DE L'INVENTION

Le dispositif selon l'invention telle que définie aux revendications 1 à 11 propose une solution aux problèmes qui viennent d'être exposés.

A cet effet, on propose dans l'invention un dispositif de contrôle de verrouillage/déverrouillage et/ou de démarrage d'un véhicule comportant un premier dispositif de communication monté dans le véhicule , ledit premier dispositif de communication étant relié à une unité de contrôle du véhicule , et un second dispositif de communication disposé dans un appareil mobile , le premier dispositif de communication et le second dispositif de communication étant configurés pour communiquer entre eux selon un premier mode de communication afin de réaliser une authentification de l'appareil mobile par le véhicule , ladite authentification autorisant le verrouillage/déverrouillage et/ou le démarrage du véhicule, le premier dispositif de communication et le second dispositif de communication étant aptes à communiquer également selon un deuxième mode de communication, afin de déterminer des données représentatives de la position de l'appareil mobile par rapport au véhicule, l'exécution, par l'unité de contrôle, de la commande de verrouillage/déverrouillage et/ou de démarrage du véhicule, étant fonction de la position de l'appareil mobile par rapport au véhicule, et le premier mode de communication étant opéré selon le protocole Bluetooth Low Energy (BLE) et le deuxième mode étant du type Ultra Wide Band (UWB).

Le dispositif selon l'invention comporte, en plus des caractéristiques principales qui viennent d'être mentionnée dans le paragraphe précédent, une ou plusieurs caractéristiques parmi les suivantes considérées individuellement ou selon les combinaisons techniquement possibles :
- le second dispositif de communication comprend :
   ∘ un module de communication BLE associé à une antenne en tant qu'émetteur/récepteur BLE ;
   ∘ un module de communication UWB associé à une antenne en tant qu'émetteur/récepteur UWB ;
- le second dispositif de communication comprend :
   ∘ un module de communication BLE ;
   ∘ un module de communication UWB ;
   lesdits modules BLE et UWB étant associés à une même antenne utilisée à la fois en tant qu'émetteur/récepteur BLE et en tant qu'émetteur/récepteur UWB ;
- le premier dispositif de communication comprend :
   ∘ un module de communication BLE, associé à une antenne utilisée en tant qu'émetteur/récepteur BLE ;
   ∘ un module de communication UWB, associé à une antenne utilisée en tant qu'émetteur/récepteur UWB ;
- le premier dispositif de communication comprend :
   ∘ - un module de communication BLE ;
   ∘ - un module de communication UWB ;
   lesdits modules BLE et UWB étant associés à une même antenne utilisée à la fois en tant qu'émetteur/récepteur BLE et en tant qu'émetteur/récepteur UWB ;
- le premier dispositif de communication comprend :
   ∘ un module de communication BLE, associé à une antenne utilisée en tant qu'émetteur/récepteur BLE ;
   ∘ un module de communication principale UWB, associé à une antenne utilisée en tant qu'émetteur/récepteur UWB
   ledit module de communication principale UWB étant également associé à au moins un module de communication secondaire UWB, associé à une antenne utilisée en tant qu'émetteur/récepteur UWB ;
- le premier dispositif de communication comprend :
   ∘ un module de communication BLE ;
   ∘ -un module de communication principale UWB ;
   ledit module de communication principale UWB étant associé à au moins un module de communication secondaire UWB, associé à une antenne utilisée en tant qu'émetteur/récepteur UWB, le module BLE et le module UWB principal étant associés à une même antenne utilisée à la fois en tant qu'émetteur/récepteur BLE et en tant qu'émetteur/récepteur UWB ;
- lesdites données représentatives de la position de l'appareil mobile par rapport au véhicule sont obtenues sur la base de la mesure du temps de parcours des signaux UWB échangés entre l'antenne UWB associée au module de communication UWB du premier dispositif de communication disposé dans le véhicule et l'antenne UWB associé au module de communication UWB du second dispositif de communication disposé dans l'appareil mobile ;
- lesdites données représentatives de la position de l'appareil mobile par rapport au véhicule sont obtenues sur la base de la mesure du temps de parcours des signaux UWB échangés entre d'une part les antennes UWB associée respectivement au module de communication UWB principale du premier dispositif de communication et aux modules de communication secondaire UWB disposés dans le véhicule et l'antenne UWB associé au module de communication UWB du second dispositif de communication disposé dans l'appareil mobile, et d'autre part sur la base d'échange UWB entre les modules de communication secondaires UWB et le module de communication UWB principale ;
- le traitement permettant d'obtenir les données représentatives de la position de l'appareil mobile par rapport au véhicule est effectué au niveau du véhicule ;
- le traitement permettant d'obtenir les données représentatives de la position de l'appareil mobile par rapport au véhicule est effectué au niveau de l'appareil mobile ;

### BREVE DESCRIPTION DES FIGURES

Les figures montrent :
- à la figure 1, une représentation schématique d'un mode de réalisation d'un dispositif de contrôle de verrouillage/déverrouillage et/ou de démarrage d'un véhicule ;
- à la figure 2, une représentation schématique d'un mode de réalisation d'un module de positionnement.

### DESCRIPTION DETAILLEE

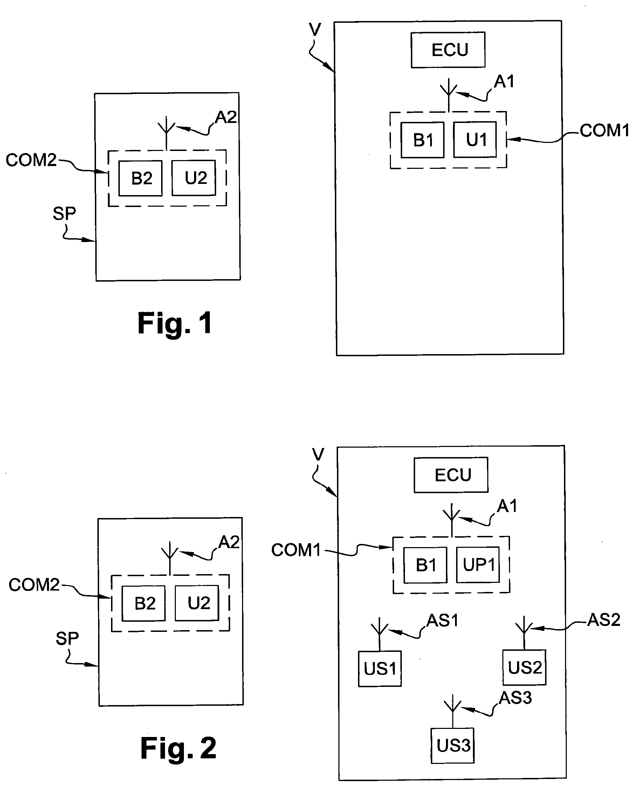

Le dispositif de contrôle de verrouillage/déverrouillage et/ou de démarrage d'un véhicule est décrit dans un mode de réalisation à la figure 1.

Dans la suite de la description, on appelle également le dispositif de contrôle de verrouillage/déverrouillage et/ou de démarrage d'un véhicule, dispositif de contrôle.

Le dispositif de contrôle comprend un premier dispositif de communication COM1 monté dans un véhicule V et un second dispositif de communication COM2 disposé dans un appareil mobile SP. Le premier dispositif de communication COM1 et le second dispositif de communication COM2 sont respectivement équipés de modules de communication B1, B2 aptes à communiquer entre eux selon le protocole de communication Bluetooth Low Energy (BLE).

Ces modules de communication B1, B2 communiquent entre eux respectivement par l'intermédiaire des antennes A1 et A2 agissant en tant qu'émetteur/récepteur BLE. On peut ainsi procéder, par échanges successifs entre le module de communication B1 du premier dispositif de communication COM1 et le module de communication B2 du second dispositif de communication COM2, à une authentification de l'appareil mobile SP auprès du véhicule V.

L'authentification de l'appareil mobile SP auprès du véhicule V nécessite que l'appareil mobile SP ait préalablement mémorisé une clé d'identification. L'authentification est alors réalisée par des échanges de données, notamment des données d'authentification contenues dans la clé d'identification, entre le premier dispositif de communication COM1 et le second dispositif de communication COM2.

Un utilisateur, muni de son appareil mobile SP, est alors apte, suite à l'authentification de celui-ci auprès du véhicule V selon le protocole BLE à exécuter des fonctions de verrouillage/déverrouillage et/ou de démarrage du véhicule V par l'intermédiaire d'une unité de contrôle ECU disposée dans le véhicule. L'unité de contrôle ECU et le dispositif de communication COM1 étant préférentiellement relié via le réseau du véhicule du type par exemple LIN ou CAN.

Bien entendu, ce premier mode de communication entre le premier dispositif de communication COM1 disposé dans le véhicule V, et le second dispositif de communication COM2 disposé dans l'appareil mobile SP, pourrait être remplacé par d'autre protocole de communication du type radiofréquence comme le protocole WiFi, ZigBee®,.. Cette réalisation particulière du protocole de communication du premier mode ne fait pourtant pas partie de l'invention telle que revendiqué.

D'autre part, dans le cadre de la certification Thatcham, bien connue de l'homme du métier, il est imposé dans le cas d'une commande de démarrage par exemple, que cette commande ne soit réellement opérée que si l'appareil mobile SP se situe à l'intérieur de l'habitacle ou tout au plus dans une limite de 20 centimètres (cm) à l'extérieur du véhicule.

L'Ultra Wide Band (UWB), ou Ultra Large Bande en français (ULB) est une technique de modulation radio qui est basée sur la transmission d'impulsions de très courte durée, souvent inférieure à la nanoseconde. Ainsi, la bande passante atteint de très grandes valeurs.

L'UWB peut être utilisé en tant que technique de communication sans fil, qui fournit des taux de transfert réseaux très élevés sur des distances relativement courtes et à faible puissance.

L'UWB peut également être utilisé pour le positionnement d'objets mobiles. Pour cela on utilise des balises UWB à partir desquelles on évalue le temps de propagation des signaux entre l'objet mobile et les balises, ce qui permet au système de calculer la position de l'objet mobile par triangulation.

Les systèmes actuels peuvent atteindre des précisions de l'ordre de 15 cm.

Afin d'obtenir la certification Thatcham, il est donc prévu selon un premier mode de réalisation de l'invention illustré en figure 1, d'équiper le premier dispositif de communication COM1 et le second dispositif de communication COM2 respectivement des modules de communication U1 et U2 opérant en UWB .

Ainsi, et comme indiqué précédemment, on pourra à partir des modules de communication UWB, U1 et U2, déterminer avec une grande précision la position de l'appareil mobile SP par rapport au véhicule V.

Dans un mode de réalisation avantageux de l'invention, les modules de communication UWB U1, U2 communiquent entre eux respectivement par l'intermédiaire des antennes A1 et A2 agissant également en tant qu'émetteur/récepteur UWB.

Dans un mode de réalisation alternatif non représenté, il est prévu d'utiliser des antennes différentes des antennes BLE A1, A2, qui agissent spécifiquement en tant qu'émetteur/récepteur UWB pour l'un des modules de communication UWB, préférentiellement U1, disposé dans le véhicule, ou pour les deux modules de communication UWB, U1 et U2.

Comme cela est prévu selon le protocole UWB, le positionnement de l'appareil mobile SP par rapport au véhicule V est obtenu à partir de l'évaluation du temps de propagation des signaux UWB entre l'antenne A2 du module de communication U2 de l'appareil mobile SP et l'antenne A1 du module de communication U1 du véhicule.

En effet, le temps de propagation est traduit en distance entre le module de communication U2 de l'appareil mobile SP et le module de communication U1 du véhicule V, ce qui permet de définir la zone de présence de l'appareil mobile SP, comme étant approximativement le cercle, de rayon égale à la distance d, centré sur l'antenne A1 du module de communication U1 du véhicule V. Les calculs de positionnement selon cette méthode peuvent s'opérer soit au niveau du véhicule V, soit préférentiellement au niveau de l'appareil mobile SP.

De manière également avantageuse, l'antenne A1 du module de communication U1 du véhicule V est située au centre de l'habitacle.

Selon un deuxième mode de réalisation de l'invention, il est prévu d'utiliser au niveau du véhicule V, plusieurs modules de communication UWB, la mesure de distance avec l'appareil mobile SP étant obtenu par triangulation.

Dans un mode de réalisation avantageux illustré figure 2, le véhicule est équipé:
- d'un module de communication UWB principal UP1 partageant l'antenne A1 avec le module BLE B1,
- de plusieurs modules UWB secondaires indépendants, US1, US2, US3, c'est-à-dire non directement reliés au réseau du véhicule, et disposant de leurs propres antennes AS1, AS2, AS3, en tant qu'émetteurs/récepteurs UWB.

Dans ce mode de réalisation, on évalue le temps de propagation des signaux UWB entre d'une part l'antenne A1 du module de communication UWB principal UP1 et l'antenne A2 du module de communication U2 de l'appareil mobile SP et d'autre part entre chacune des antennes AS1, AS2, AS3 des modules de communication UWB secondaires US1, US2, US3 et l'antenne A2 du module de communication U2 de l'appareil mobile SP. Les modules de communication UWB secondaires US1, US2, US3 communiquent également avec l'unité principale UP1 par échanges UWB, pour transmettre leur évaluation du temps de propagation vis-à-vis de l'appareil mobile, mais également pour déterminer leur positionnement relatif vis-à-vis du module de communication UWB principal UP1, l'ensemble des valeurs de temps de propagation des signaux UWB étant compilées afin de déterminer le positionnement de l'appareil mobile SP par rapport au véhicule V à partir d'une triangulation.

Dans un autre mode de réalisation, on peut prévoir à la première mise sous tension du véhicule, une phase de calibration du positionnement des modules de communication UWB secondaires US1, US2, US3 vis-à-vis du module de communication UWB principal UP1. Ainsi lors de la phase d'évaluation du positionnement de l'appareil mobile SP, les modules de communication UWB secondaires US1, US2, US3 ne communiqueront que leur évaluation du temps de propagation vis-à-vis de l'appareil mobile SP.

Ainsi, grâce au dispositif selon l'invention et donc grâce à la combinaison des protocoles de communication BLE et UWB, il est possible de garantir avec précision que l'exécution d'une fonction du véhicule V, telle le verrouillage/déverrouillage ou le démarrage, soit réalisée lorsque l'appareil mobile se trouve à la position requise par rapport au véhicule V.

## Revendications

1. Dispositif de contrôle de verrouillage/déverrouillage et/ou de démarrage d'un véhicule (V) comportant un premier dispositif de communication (COM1) monté dans le véhicule (V), ledit premier dispositif de communication (COM1) étant relié à une unité de contrôle (ECU) du véhicule (V), et un second dispositif de communication (COM2) disposé dans un appareil mobile (SP), le premier dispositif de communication (COM1) et le second dispositif de communication (COM2) étant configurés pour communiquer entre eux selon un premier mode de communication afin de réaliser une authentification de l'appareil mobile (SP) par le véhicule (V), ladite authentification autorisant le verrouillage/déverrouillage et/ou le démarrage du véhicule (V), le premier dispositif de communication (COM1) et le second dispositif de communication (COM2) étant aptes à communiquer également selon un deuxième mode de communication, afin de déterminer des données représentatives de la position de l'appareil mobile (SP) par rapport au véhicule (V), l'exécution, par l'unité de contrôle (ECU), de la commande de verrouillage/déverrouillage et/ou de démarrage du véhicule (V), étant fonction desdites données représentatives de la position de l'appareil mobile (SP) par rapport au véhicule (V), et le premier mode de communication étant opéré selon le protocole Bluetooth Low Energy (BLE) et le deuxième mode de communication étant du type Ultra Wide Band (UWB).

2. Dispositif selon la revendication 1, **caractérisé en ce que** le second dispositif de communication (COM2) comprend :
- un module de communication BLE (B2), associé à une antenne (A2) en tant qu'émetteur/récepteur BLE ;
- un module de communication UWB (U2), associé à une antenne (A2) en tant qu'émetteur/récepteur UWB.

3. Dispositif selon la revendication 1, **caractérisé en ce que** le second dispositif de communication (COM2) comprend :
- un module de communication BLE (B2) ;
- un module de communication UWB (U2) ;
lesdits modules BLE (B2) et UWB (U2) étant associés à une même antenne (A2) utilisée à la fois en tant qu'émetteur/récepteur BLE et en tant qu'émetteur/récepteur UWB.

4. Dispositif selon l'une quelconque des revendications 2 ou 3, **caractérisé en ce que** le premier dispositif de communication (COM1) comprend :
- un module de communication BLE (B1), associé à une antenne (A1) utilisée en tant qu'émetteur/récepteur BLE ;
- un module de communication UWB (U1), associé à une antenne (A1) utilisée en tant qu'émetteur/récepteur UWB.

5. Dispositif selon l'une quelconque des revendications 2 ou 3, **caractérisé en ce que** le premier dispositif de communication (COM1) comprend :
- un module de communication BLE (B1) ;
- un module de communication UWB (U1) ;
lesdits modules BLE (B1) et UWB (U1) étant associés à une même antenne (A1) utilisée à la fois en tant qu'émetteur/récepteur BLE et en tant qu'émetteur/récepteur UWB.

6. Dispositif selon l'une quelconque des revendications 2 ou 3, **caractérisé en ce que** le premier dispositif de communication (COM1) comprend :
- un module de communication BLE (B1), associé à une antenne (A1) utilisée en tant qu'émetteur/récepteur BLE ;
- un module de communication principale UWB (UP1), associé à une antenne (A1) utilisée en tant qu'émetteur/récepteur UWB
ledit module de communication principale UWB (UP1) étant également associé à au moins un module de communication secondaire UWB (US1, US2, US3), associé à une antenne (AS1, AS2, AS3) utilisée en tant qu'émetteur/récepteur UWB.

7. Dispositif selon l'une quelconque des revendications 2 ou 3, **caractérisé en ce que** le premier dispositif de communication (COM1) comprend :
- un module de communication BLE (B1) ;
- un module de communication principale UWB (UP1) ;
ledit module de communication principale UWB (UP1) étant associé à au moins un module de communication secondaire UWB (US1, US2, US3), associé à une antenne (AS1, AS2, AS3) utilisée en tant qu'émetteur/récepteur UWB, ledit module BLE (B1) et ledit module UWB principal (UP1) étant associés à une même antenne (A1) utilisée à la fois en tant qu'émetteur/récepteur BLE et en tant qu'émetteur/récepteur UWB.

8. Dispositif selon l'une quelconque des revendications 4 ou5, **caractérisé en ce que** lesdites données représentatives de la position de l'appareil mobile (SP) par rapport au véhicule (V) sont obtenues sur la base de la mesure du temps de parcours des signaux UWB échangés entre l'antenne UWB (A1) associée au module de communication UWB (U1) du premier dispositif de communication (COM1) disposé dans le véhicule et l'antenne UWB (A2) associé au module de communication UWB (U2) du second dispositif de communication (COM2) disposé dans l'appareil mobile (SP).

9. Dispositif selon la revendication 6 ou 7, **caractérisé en ce que** lesdites données représentatives de la position de l'appareil mobile (SP) par rapport au véhicule (V) sont obtenues sur la base de la mesure du temps de parcours des signaux UWB échangés entre d'une part les antennes UWB (A1AS1, AS2, AS3) associée respectivement au module de communication UWB principale (UP1) du premier dispositif de communication (COM1) et aux modules de communication secondaire UWB (US1, US2, US3) disposés dans le véhicule (V) et l'antenne UWB (A2) associé au module de communication UWB (U2) du second dispositif de communication (COM2) disposé dans l'appareil mobile (SP), et d'autre part sur la base d'échange UWB entre les modules de communication secondaires UWB (US1, US2, US3) et le module de communication UWB principale (UP1).

10. Dispositif selon la revendication 8 ou 9, **caractérisé en ce que** le traitement permettant d'obtenir les données représentatives de la position de l'appareil mobile (SP) par rapport au véhicule (V) est effectué au niveau du véhicule (V).

11. Dispositif selon la revendication 8 ou 9, **caractérisé en ce que** le traitement permettant d'obtenir les données représentatives de la position de l'appareil mobile (SP) par rapport au véhicule (V) est effectué au niveau de l'appareil mobile (SP).

## Patentansprüche

1. Vorrichtung zur Steuerung der Verriegelung/Entriegelung und/oder des Starts eines Fahrzeugs (V), welche eine erste Kommunikationsvorrichtung (COM1), die in dem Fahrzeug (V) angebracht ist, wobei die erste Kommunikationsvorrichtung (COM1) mit einem Steuergerät (ECU) des Fahrzeugs (V) verbunden ist, und eine zweite Kommunikationsvorrichtung (COM2), die in einem Mobilgerät (SP) angeordnet ist, aufweist, wobei die erste Kommunikationsvorrichtung (COM1) und die zweite Kommunikationsvorrichtung (COM2) dafür ausgelegt sind, gemäß einem ersten Kommunikationsmodus miteinander zu kommunizieren, um eine Authentifizierung des Mobilgerätes (SP) durch das Fahrzeug (V) durchzuführen, wobei die Authentifizierung die Verriegelung/Entriegelung und/oder den Start des Fahrzeugs (V) gestattet, wobei die erste Kommunikationsvorrichtung (COM1) und die zweite Kommunikationsvorrichtung (COM2) geeignet sind, auch gemäß einem zweiten Kommunikationsmodus zu kommunizieren, um Daten zu bestimmen, die für die Position des Mobilgerätes (SP) in Bezug auf das Fahrzeug (V) repräsentativ sind, wobei die Ausführung, durch das Steuergerät (ECU), des Befehls zur Verriegelung/Entriegelung und/oder zum Start des Fahrzeugs (V) von den Daten abhängt, die für die Position des Mobilgerätes (SP) in Bezug auf das Fahrzeug (V) repräsentativ sind, und wobei der erste Kommunikationsmodus gemäß dem Protokoll Bluetooth Low Energy (BLE) betrieben wird und der zweite Kommunikationsmodus vom Typ Ultrabreitband (Ultra Wide Band, UWB) ist.

2. Vorrichtung nach Anspruch 1, **dadurch gekennzeichnet, dass** die zweite Kommunikationsvorrichtung (COM2) umfasst:
- ein BLE-Kommunikationsmodul (B2), das einer Antenne (A2) als BLE-Sendeempfänger zugeordnet ist;
- ein UWB-Kommunikationsmodul (U2), das einer Antenne (A2) als UWB-Sendeempfänger zugeordnet ist.

3. Vorrichtung nach Anspruch 1, **dadurch gekennzeichnet, dass** die zweite Kommunikationsvorrichtung (COM2) umfasst:
- ein BLE-Kommunikationsmodul (B2);
- ein UWB-Kommunikationsmodul (U2)
wobei das BLE-Modul (B2) und das UWB-Modul (U2) ein und derselben Antenne (A2) zugeordnet sind, die gleichzeitig als BLE-Sendeempfänger und als UWB-Sendeempfänger verwendet wird.

4. Vorrichtung nach einem der Ansprüche 2 oder 3, **dadurch gekennzeichnet, dass** die erste Kommunikationsvorrichtung (COM1) umfasst:
- ein BLE-Kommunikationsmodul (B1), das einer Antenne (A1) zugeordnet ist, die als BLE-Sendeempfänger verwendet wird;
- ein UWB-Kommunikationsmodul (U1), das einer Antenne (A1) zugeordnet ist, die als UWB-Sendeempfänger verwendet wird.

5. Vorrichtung nach einem der Ansprüche 2 oder 3, **dadurch gekennzeichnet, dass** die erste Kommunikationsvorrichtung (COM1) umfasst:
- ein BLE-Kommunikationsmodul (B1);
- ein UWB-Kommunikationsmodul (U1)
wobei das BLE-Modul (B1) und das UWB-Modul (U1) ein und derselben Antenne (A1) zugeordnet sind, die gleichzeitig als BLE-Sendeempfänger und als UWB-Sendeempfänger verwendet wird.

6. Vorrichtung nach einem der Ansprüche 2 oder 3, **dadurch gekennzeichnet, dass** die erste Kommunikationsvorrichtung (COM1) umfasst:
- ein BLE-Kommunikationsmodul (B1), das einer Antenne (A1) zugeordnet ist, die als BLE-Sendeempfänger verwendet wird;
- ein UWB-Hauptkommunikationsmodul (UP1), das einer Antenne (A1) zugeordnet ist, die als UWB-Sendeempfänger verwendet wird,
wobei das UWB-Hauptkommunikationsmodul (UP1) außerdem mindestens einem sekundären UWB-Kommunikationsmodul (US1, US2, US3) zugeordnet ist, das einer Antenne (AS1, AS2, AS3) zugeordnet ist, die als UWB-Sendeempfänger verwendet wird.

7. Vorrichtung nach einem der Ansprüche 2 oder 3, **dadurch gekennzeichnet, dass** die erste Kommunikationsvorrichtung (COM1) umfasst:
- ein BLE-Kommunikationsmodul (B1);
- ein UWB-Hauptkommunikationsmodul (UP1);
wobei das UWB-Hauptkommunikationsmodul (UP1) mindestens einem sekundären UWB-Kommunikationsmodul (US1, US2, US3) zugeordnet ist, das einer Antenne (AS1, AS2, AS3) zugeordnet ist, die als UWB-Sendeempfänger verwendet wird, wobei das BLE-Modul (B1) und das UWB-Hauptmodul (UP1) ein und derselben Antenne (A1) zugeordnet sind, die gleichzeitig als BLE-Sendeempfänger und als UWB-Sendeempfänger verwendet wird.

8. Vorrichtung nach einem der Ansprüche 4 oder 5, **dadurch gekennzeichnet, dass** die Daten, die für die Position des Mobilgerätes (SP) in Bezug auf das Fahrzeug (V) repräsentativ sind, auf der Basis der Messung der Laufzeit der UWB-Signale gewonnen werden, die zwischen der UWB-Antenne (A1), die dem UWB-Kommunikationsmodul (U1) der im Fahrzeug angeordneten ersten Kommunikationsvorrichtung (COM1) zugeordnet ist, und der UWB-Antenne (A2), die dem UWB-Kommunikationsmodul (U2) der im Mobilgerät (SP) angeordneten zweiten Kommunikationsvorrichtung (COM2) zugeordnet ist, ausgetauscht werden.

9. Vorrichtung nach Anspruch 6 oder 7, **dadurch gekennzeichnet, dass** die Daten, die für die Position des Mobilgerätes (SP) in Bezug auf das Fahrzeug (V) repräsentativ sind, auf der Basis der Messung der Laufzeit der UWB-Signale gewonnen werden, die zwischen einerseits den UWB-Antennen (A1, AS1, AS2, AS3), die dem UWB-Hauptkommunikationsmodul (UP1) der ersten Kommunikationsvorrichtung (COM1) bzw. den sekundären UWB-Kommunikationsmodulen (US1, US2, US3) zugeordnet sind, die im Fahrzeug (V) angeordnet sind, und der UWB-Antenne (A2), die dem UWB-Kommunikationsmodul (U2) der im Mobilgerät (SP) angeordneten zweiten Kommunikationsvorrichtung (COM2) zugeordnet ist, ausgetauscht werden, und andererseits auf der Basis des UWB-Austauschs zwischen den sekundären UWB-Kommunikationsmodulen (US1, US2, US3) und dem UWB-Hauptkommunikationsmodul (UP1).

10. Vorrichtung nach Anspruch 8 oder 9, **dadurch gekennzeichnet, dass** die Verarbeitung, die es ermöglicht, die für die Position des Mobilgerätes (SP) in Bezug auf das Fahrzeug (V) repräsentativen Daten zu gewinnen, am Fahrzeug (V) durchgeführt wird.

11. Vorrichtung nach Anspruch 8 oder 9, **dadurch gekennzeichnet, dass** die Verarbeitung, die es ermöglicht, die für die Position des Mobilgerätes (SP) in Bezug auf das Fahrzeug (V) repräsentativen Daten zu gewinnen, am Mobilgerät (SP) durchgeführt wird.

## Claims

1. Device for controlling locking/unlocking and/or starting of a vehicle (V), comprising a first communication device (COM1) fitted in the vehicle (V), said first communication device (COM1) being connected to a control unit (ECU) of the vehicle (V), and a second communication device (COM2) located in a mobile apparatus (SP), the first communication device (COM1) and the second communication device (COM2) being designed to communicate with one another in a first communication mode so that an authentication of the mobile apparatus (SP) can be carried out by the vehicle (V), said authentication enabling the locking/unlocking and/or starting of the vehicle (V), the first communication device (COM1) and the second communication device (COM2) also being capable of communicating in a second communication mode in order to determine data representative of the position of the mobile apparatus (SP) with respect to the vehicle (V), the execution by the control unit (ECU) of the command for locking/unlocking and/or for starting the vehicle (V) being a function of said data representative of the position of the mobile apparatus (SP) with respect to the vehicle (V), and the first communication mode being operated according to the Bluetooth Low Energy (BLE) protocol, and the second communication mode being of the Ultra Wide Band (UWB) type.

2. Device according to Claim 1, **characterized in that** the second communication device (COM2) comprises:
- a BLE communication module (B2) associated with an antenna (A2) acting as a BLE transmitter-receiver;
- a UWB communication module (U2) associated with an antenna (A2) acting as a UWB transmitter-receiver.

3. Device according to Claim 1, **characterized in that** the second communication device (COM2) comprises:
- a BLE communication module (B2);
- a UWB communication module (U2);
said BLE (B2) and UWB (U2) modules being associated with the same antenna (A2), used as both a BLE transmitter-receiver and a UWB transmitter-receiver.

4. Device according to either one of Claims 2 and 3, **characterized in that** the first communication device (COM1) comprises:
- a BLE communication module (B1) associated with an antenna (A1) used as a BLE transmitter-receiver;
- a UWB communication module (U1) associated with an antenna (A1) used as a UWB transmitter-receiver.

5. Device according to either one of Claims 2 and 3, **characterized in that** the first communication device (COM1) comprises:
- a BLE communication module (B1);
- a UWB communication module (U1);
said BLE (B1) and UWB (U1) modules being associated with the same antenna (A1), used as both a BLE transmitter-receiver and a UWB transmitter-receiver.

6. Device according to either one of Claims 2 and 3, **characterized in that** the first communication device (COM1) comprises:
- a BLE communication module (B1) associated with an antenna (A1) used as a BLE transmitter-receiver;
- a main UWB communication module (UP1) associated with an antenna (A1) used as a UWB transmitter-receiver, said main UWB communication module (UP1) also being associated with at least one secondary UWB communication module (US1, US2, US3), associated with an antenna (AS1, AS2, AS3) used as a UWB transmitter-receiver.

7. Device according to either one of Claims 2 and 3, **characterized in that** the first communication device (COM1) comprises:
- a BLE communication module (B1);
- a main UWB communication module (UP1);
said main UWB communication module (UP1) being associated with at least one secondary UWB communication module (US1, US2, US3), associated with an antenna (AS1, AS2, AS3) used as a UWB transmitter-receiver, said BLE module (B1) and said main UWB module (UP1) being associated with the same antenna (A1) used as both a BLE transmitter-receiver and a UWB transmitter-receiver.

8. Device according to either one of Claims 4 and 5, **characterized in that** said data representative of the position of the mobile apparatus (SP) with respect to the vehicle (V) are obtained on the basis of the measurement of the travel time of the UWB signals exchanged between the UWB antenna (A1) associated with the UWB communication module (U1) of the first communication device (COM1) positioned in the vehicle and the UWB antenna (A2) associated with the UWB communication module (U2) of the second communication device (COM2) positioned in the mobile apparatus (SP).

9. Device according to Claim 6 or 7, **characterized in that** said data representative of the position of the mobile apparatus (SP) with respect to the vehicle (V) are obtained on the basis of the measurement of the travel time of the UWB signals exchanged between, on the one hand, the UWB antennas (A1, AS1, AS2, AS3) associated, respectively, with the main UWB communication module (UP1) of the first communication device (COM1) and with the secondary UWB communication modules (US1, US2, US3) positioned in the vehicle (V) and the UWB antenna (A2) associated with the UWB communication module (U2) of the second communication device (COM2) positioned in the mobile apparatus (SP), and, on the other hand, on the basis of UWB exchange between the secondary UWB communication modules (US1, US2, US3) and the main UWB communication module (UP1).

10. Device according to Claim 8 or 9, **characterized in that** the processing for obtaining the data representative of the position of the mobile apparatus (SP) with respect to the vehicle (V) is carried out in the vehicle (V).

11. Device according to Claim 8 or 9, **characterized in that** the processing for obtaining the data representative of the position of the mobile apparatus (SP) with respect to the vehicle (V) is carried out in the mobile apparatus (SP)
